# EUROPEAN PATENT APPLICATION

(11) **EP 1 734 681 A1**
(43) Date of publication of application: **20.12.2006**
(21) Application number: 06012302.3
(22) Date of filing: 14.06.2006
(51) Int. Cl.: H04H 9/00, H04H 1/00

(54) **Call originating method using phone number provided during broadcasting for digital broadcasting player and digital broadcasting system using the call originating method**

(30) Priority: 16.06.2005 KR 20050051965
(71) Applicant: Samsung Electronics Co., Ltd., Yeongtong-gu Suwon-si, Gyeonggi-do (KR)
(72) Inventor: Jung, Jae-Young, Yeongtong-gu Suwon-si Gyeonggi-do (DE); You, Jeong-Min, Yeongtong-gu Suwon-si Gyeonggi-do (DE); Kim, Byung-Wook, Yeongtong-gu Suwon-si Gyeonggi-do (DE); Lee, Young-Sik, Yeongtong-gu Suwon-si Gyeonggi-do (DE)
(74) Representative: Grünecker, Kinkeldey, Stockmair & Schwanhäusser Anwaltssozietät

(57) **Abstract**

Provided are a digital broadcasting system and a call originating method using a phone number provided as being included in a Transport Stream (TS) packet for a digital broadcasting player. The digital broadcasting system includes a digital broadcasting station for transmitting a Transport Stream (TS) packet including a phone number and a digital broadcasting player for receiving the TS packet, detecting the phone number from the received TS packet, and originating a call using the detected phone number if a user's call originating instruction is detected during playback of broadcasting. The call originating method during playback of broadcasting for the digital broadcasting player includes the steps of receiving a TS packet including a phone number, detecting the phone number from the received TS packet, and originating a call using the detected phone number if a user's call originating instruction is detected during playback of broadcasting. The phone number may be included in an adaptation field or an Electronic Program Guide (EPG) of the TS packet.

## Description

The present invention relates generally to a digital broadcasting system, and in particular, to a call originating method using a phone number provided from a broadcasting station for a digital broadcasting player and a digital broadcasting system using the call originating method.

An Automatic Response Service (ARS) number is often displayed during a broadcasting program for inviting viewers to participate in charity donation collection, song or start popularity polling, or quiz programs. In addition, viewers may call a phone number shown in the caption of the screen when they desire to make inquiry about a product while viewing a home shopping program.

In the case of a broadcasting program for charity donation collection, when viewing the broadcasting program on general TVs, viewers may participate in the donation process by calling an ARS number displayed in the caption of the TV screen using their telephones or cellular phones . When watching the broadcasting program on a digital broadcasting player such as a Digital Multimedia Broadcasting (DMB) receiving terminal, viewers may terminate the broadcasting program, connect a call by inputting the provided ARS number, complete the donation process, and then return to the DMB screen.

In both cases, the viewers should directly input the ARS number. In the latter case, the viewers should memorize or separately record the ARS number. In other words, when watching the broadcasting program on the general TVs, the viewers can input the ARS number using a separate telephone while watching the provided ARS number. However, when watching the DMB program using a terminal having a phone call function and a DMB playback function, they should first switch the operational mode of the terminal from a DMB viewing mode to a call mode in order to make a call using the terminal.

It is troublesome for the viewers to input the ARS number provided on the TV screen into a separate telephone as in the former case. Similarly, it is troublesome for the viewers to switch the operational mode of the terminal and input the ARS number that is memorized or recorded as in the latter case.

It is, therefore, the object of the present invention to provide a method, in which a call can be originated using a call back number provided from a digital broadcasting station during playback of broadcasting by a digital broadcasting player without user's input of a phone number.

This object is solved by the subject matter of the independent claims.

Preferred embodiments are defined in the dependent claims.

It is an aspect of the present invention to provide a method, in which a call can be originated using a call back number provided from a digital broadcasting station and a user can participate in charity donation collection process during playback of broadcasting by a digital broadcasting player without user's input of a phone number.

According to another aspect of the present invention, there is provided a digital broadcasting system including a digital broadcasting station for transmitting a Transport Stream (TS) packet including a phone number and a digital broadcasting player for receiving the TS packet, detecting the phone number from the received TS packet, and originating a call using the detected phone number if a user's call originating instruction is sensed during playback of broadcasting.

According to another aspect of the present invention, there is provided a call originating method during playback of broadcasting for a digital broadcasting player. The call originating method includes the steps of receiving a Transport Stream (TS) packet including a phone number, detecting the phone number from the received TS packet, and originating a call using the detected phone number if a user's call originating instruction is sensed during playback of broadcasting.

The TS packet may have an adaptation field including the phone number. The TS packet may include an Electronic Program Guide (EPG) including the phone number. The call origination is performed for transmission of a Short Message Service (SMS) message, voice communication, or connection of an ARS call.

The present invention will become more apparent from the following detailed description when taken in conjunction with the accompanying drawings in which:
FIG. 1 illustrates an adaptation field of a Transport Stream (TS) packet, which is defined in International Organization for Standard/ International Electrotechnical Commission (ISO/IEC) 13818-1;
FIG. 2 illustrates the configuration of a private_data_byte according to the present invention in the adaptation field of FIG. 1;
FIG. 3 is a flowchart illustrating a process of acquiring a phone number from a digital multimedia TS packet in a Digital Multimedia Broadcasting (DMB) receiving terminal according to the present invention;
FIG. 4 is a flowchart illustrating a process of originating a call using the phone number acquired from the digital multimedia TS packet in the DMB receiving terminal according to the present invention; and
FIG. 5 is a flowchart illustrating a process of acquiring a phone number from a DMB Electronic Program Guide (EPG) in the DMB receiving terminal according to the present invention.

Preferred embodiments of the present invention will now be described in detail with reference to the accompanying drawings. In the following description, a detailed description of known functions and configurations incorporated herein has been omitted for conciseness.

According to the present invention, a digital broadcasting station encapsulates broadcasting data into a Moving Picture Experts Group-2 (MPEG2) Transport Stream (TS) packet for transmission. The digital broadcasting station also encapsulates a call back number into the TS packet for transmission, and a Digital Multimedia Broadcasting (DMB) receiving terminal detects the call back number from the received TS packet, stores the detected call back number, and reads the stored call back number in response to a user's call originating instruction when the user desires to make a call (during playback of broadcasting).

For example, in the case of a charity donation collection broadcasting program, the digital broadcasting station encapsulates a phone number into a private_data_byte of an adaptation field of every TS packet transmitted during the program, and the DMB receiving terminal detects the phone number if the TS packet includes the private_data_byte, stores the detected phone number in a memory, reads the phone number from the memory if the user inputs a specific key or selects a menu for donation, and transmits a Short Message Service (SMS) message or performs automatic dialing for voice communication with a partner or an Automatic Response Service (ARS) communication in which the user presses a button or records his/her voice according to voice instructions.

According to the present invention, the digital broadcasting station may encapsulate a phone number into an Electronic Program Guide (EPG) for transmission.

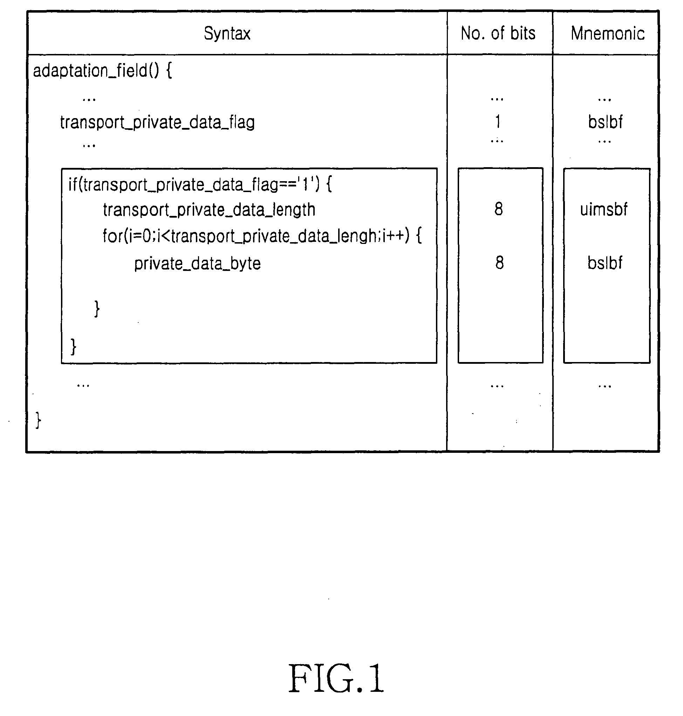

FIG. 1 illustrates an adaptation field of a TS packet, which is defined in ISO/IEC 13818-1.

When the digital broadcasting station transmits the TS packet, the private_data_byte is transmitted after setting a transport_private_data_flag of the adaptation field to 1 and a transport_private_data_length of the adaptation field to 13. The transport_private_data_flag indicates whether the TS packet includes the private_data_byte.

The TS packet may or may not include the adaptation field, and a receiving side analyzes a packet header to determine whether the TS packet includes the adaptation field. The packet header is composed of 4 bytes and the adaptation field may be included in a payload field of the 188-byte TS packet except for the 4-byte packet header.

If the transport_private_data_length is set to 13, a variable i varies from 0 to 13 in "for (i=0;i<transport_private_data_length;i++){private_data_byte}" as can be seen in a syntax and thirteen 8 bits form the private_data_byte.

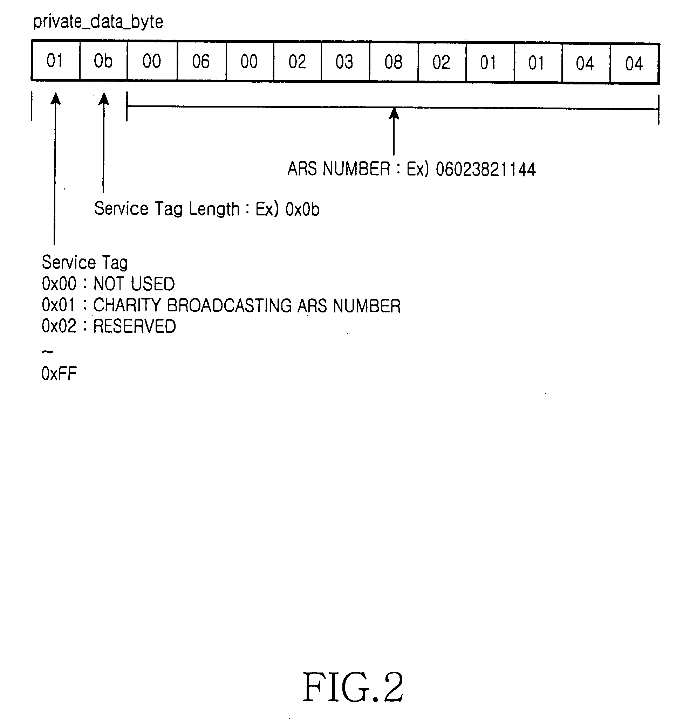

FIG. 2 illustrates the configuration of the private_data_byte according to the present invention in the adaptation field of FIG. 1.

As illustrated in FIG. 2, the first 1 byte of the private_data_byte is used as a service tag field indicating that the type of transmission information (e.g., a charity donation ARS number) is included, the second 1 byte is used as a service tag length field, and the remaining byte is used as a phone number field.

If the transport_private_data_flag of the adaptation field of the TS packet is set to 1 and the service tag has a specific value (e.g., 0x01), the DMB receiving terminal determines that transmission information (e.g., the charity donation ARS number) corresponding to the specific value is transmitted. The DMB receiving terminal also analyzes following TS packets received after the TS packet to store the latest phone number in the memory.

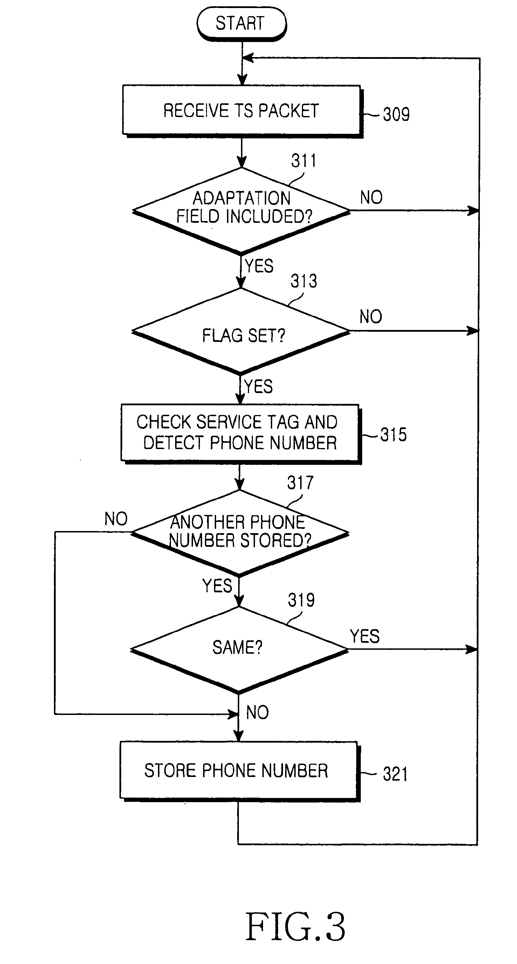

FIG. 3 is a flowchart illustrating a process of acquiring a phone number from a digital multimedia TS packet in the DMB receiving terminal according to the present invention.

In the current embodiment of the present invention, it is assumed that a digital multimedia broadcasting station encapsulates a specific phone number into the private_data_byte of the TS packet for transmission. In the case of a charity donation collection broadcasting program, the digital multimedia broadcasting station encapsulates a charity donation ARS number into the private_data_byte of every TS packet for transmission during broadcasting.

The DMB receiving terminal receives a TS packet in step 309 and checks if an adaptation field is included in the received TS packet in step 311. If the adaptation field is not included in the received TS packet, the DMB receiving terminal goes back to step 309 to check if a next received TS packet includes an adaptation field.

If the adaptation field is included in the received TS packet, the DMB receiving terminal checks the state of a flag in step 313. This flag is a transport_private_data_flag of the adaptation field. If the transport_private_data_flag is set, the DMB receiving terminal checks a service tag (e.g., a charity donation phone number) and detects the phone number in step 315.

In step 317, the DMB receiving terminal then checks if another phone number has already been stored in a memory region corresponding to the service tag (e.g., the memory region for storing the charity donation phone number). If so, the DMB receiving terminal compares the detected phone number with the stored phone number in step 319. If those phone numbers are the same, the DMB receiving terminal returns to step 309. If those phone number are not the same, the DMB receiving terminal stores the detected phone number in the memory region corresponding to the service tag in step 321, thereby storing the latest phone number.

If the transport_private_data_flag is not set in step 313, the detected phone number and the stored phone number are not the same in step 319, or storage of the latest phone number is completed in step 321, the DMB receiving terminal returns to step 309.

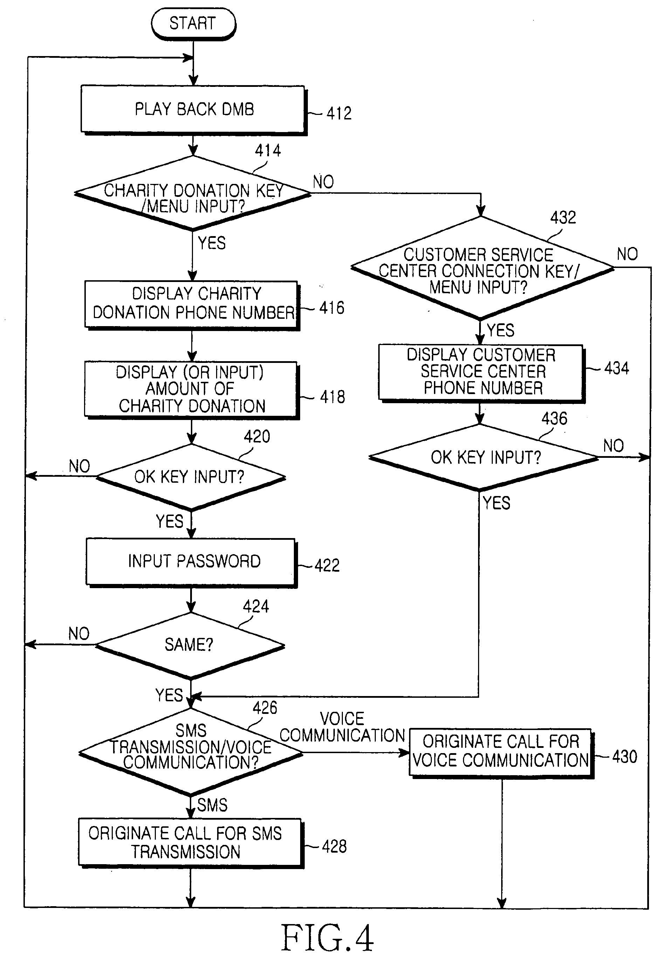

FIG. 4 is a flowchart illustrating a process of originating a call using the phone number acquired from the digital multimedia TS packet in the DMB receiving terminal according to the present invention.

Although charity donation or voice communication with a customer service center is taken as an example in FIG. 4, the following description may also be applied to other cases.

The DMB receiving terminal plays back DMB in step 412 and checks if a charity donation key or menu is input in step 414. If the input of the charity donation key or menu is sensed, the DMB receiving terminal reads and displays a charity donation phone number stored in a memory region corresponding to the input charity donation key or menu in step 416. At this time, the charity donation phone number is a call back number that does not require edition. Thus, a program is designed such that an edit function (edition of the phone number by the user) is not available in this case, though the edit function is available after display of a called phone number (display of a destination phone number in SMS message transmission or display of a phone number selected from a phone directory) in common cases.

After displaying the charity donation phone number, the DMB receiving terminal displays the amount of donation in step 418. At this time, the DMB receiving terminal displays the amount of donation input by the user or the fixed amount of donation that is previously designated by the digital multimedia broadcasting station. The displayed amount of donation cannot be further modified by the user. After displaying the amount of donation, the DMB receiving terminal checks if an OK key is input in step 420. If so, the DMB receiving terminal receives the input of a password in step 422. Although not shown in FIG. 4, the DMB receiving terminal may display a message requesting the user to input the password. The DMB receiving terminal compares the input password with a previously registered password in step 424. If the input password and the previously registered password are the same, the DMB receiving terminal checks for which one of SMS message transmission and voice communication the user desires to originate a call in step 426. If the user selects call origination for SMS message transmission, i.e., SMS call origination, the DMB receiving terminal goes to step 428 to transmit an SMS message using the charity donation phone number displayed in step 416. The transmitted SMS message may be the wording indicating that the user desires to make a donation amounting to the amount of donation displayed in step 418. To this end, a memory region that stores the default wording excluding the amount of donation should be further included.

Although not shown in FIG. 4, if step 418 is excluded according to the present invention, the wording may indicate both the amount of donation input by the user and user's intention to donate. On the other hand, if the user selects call origination for voice communication, i.e., voice call origination, the DMB receiving terminal goes to step 430 to automatically dial the charity donation phone number displayed in step 416 for connection of a communication path.

If the input of the charity donation key or menu is not detected in step 414, the DMB receiving terminal checks if a customer service center connection key or menu is input in step 432. If so, the DMB receiving terminal reads and displays a customer service center phone number stored in a memory region corresponding to the input customer service center connection key or menu in step 434. After displaying the customer service center phone number, the DMB receiving terminal checks if an OK key is input in step 436. If so, the DMB receiving terminal goes to step 426 to check for which one of SMS message transmission and voice communication the user desires to originate a call. If the user selects SMS call origination, the DMB receiving terminal goes to step 428 to transmit an SMS message using the customer service center phone number displayed in step 434. A subsequent operation of the DMB receiving terminal is similar to SMS message transmission.

On the other hand, if the user selects voice call origination, the DMB receiving terminal goes to step 430 to automatically dial the customer service center phone number displayed in step 434 for connection of a communication path between the user and the customer service center.

The process of checking the input of the OK key in steps 420 and 432 and the process of checking the input of the password in step 422 are optional processes. However, it would be desirable to check the password when call origination is made for donation rather than for voice communication with the customer service center. For voice communication, the password may also be checked to determine whether the user is authorized to make voice communication.

In addition, instead of SMS call origination or voice call origination, a call back may be made through one of SMS message transmission or voice communication in step 426. In other words, if the charity donation phone number displayed in step 416 is a phone number to which an SMS message is destined and the input password and the previously registered password are the same in step 424, the DMB receiving terminal may go to step 428 for transmission of the SMS message.

As another example, if the phone number stored in the memory region corresponding to the input charity donation key or menu is not the phone number to which the SMS message is destined, but a charity donation ARS number in step 416 and the input password and the previously registered password are the same in step 424, the DMB receiving terminal may automatically dial the charity donation ARS number in step 428. When the ARS call is connected, the user may set the amount of donation according to the ARS instructions.

If the customer service center connection key or menu is not input in step 432 or the OK key is not input in step 420 or 436, or after call origination is made in step 430 or call origination is made for SMS message transmission in step 428, the DMB receiving terminal goes to step 412.

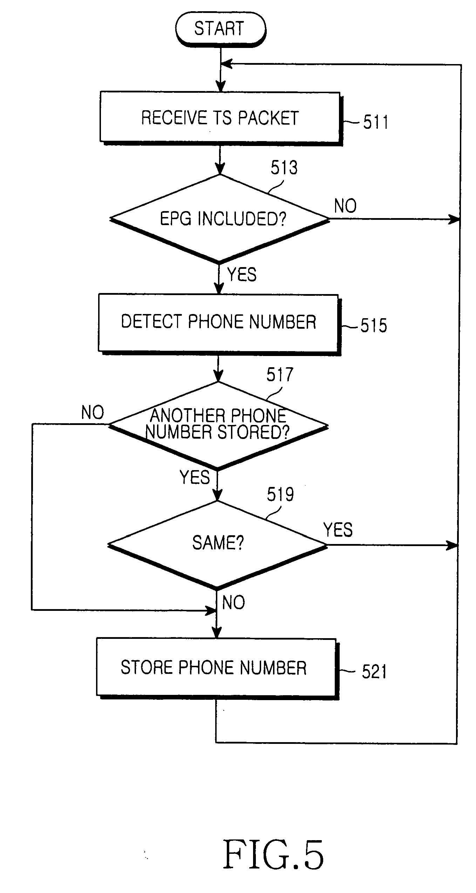

FIG. 5 is a flowchart illustrating a process of acquiring a phone number from a DMB EPG in the DMB receiving terminal according to the present invention.

In step 511, the DMB receiving terminal receives a TS packet. The DMB receiving terminal checks if the received TS packet includes an EPG. If so, the DMB receiving terminal detects a phone number from the EPG in step 515. If the received TS packet does not include the EPG, the DMB receiving terminal goes back to step 511 to check if a next received TS packet includes an EPG.

After detecting the phone number from the EPG, the DMB receiving terminal checks if another phone number has already been stored in a memory region in step 517. If so, the DMB receiving terminal compares the detected phone number with the stored phone number in step 519. If those phone numbers are the same, the DMB receiving terminal returns to step 511. If those phone number are not the same, the DMB receiving terminal stores the detected phone number in the memory region in step 521, thereby storing the latest phone number. After storage of the latest phone number, the DMB receiving terminal returns to step 511.

If there is no phone number that has already been stored in the memory region in step 517, the DMB receiving terminal goes to step 521 to store the detected phone number in the memory region. In this case, the EPG including the detected phone number is first received.

When the user donates or makes a call to a customer service center, a process of originating a call using the phone number acquired from the EPG is the same as that of FIG. 4 and a description thereof will not be provided.

Although not shown in the accompanying figures, according to the present invention, when the number of times the phone number is not detected from the private_data_byte of the received TS packet (step 309 of FIG. 3) is greater than a threshold value, it is determined that a corresponding program is terminated. Thereafter, a user's call originating instruction (steps 414 and 432 in FIG. 4) is neglected. To this end, a separate flag is included and whether to neglect a user's call originating instruction may be determined according to the state of the flag (the state changes from a first state to a second state when the corresponding program is terminated).

According to another embodiment of the present invention, the start time and the termination time of the corresponding program can be recognized by referring to the EPG.

As described above, according to the present invention, the digital broadcasting station encapsulates a call back number in a TS packet for transmission, and the digital broadcasting player detects and stores the call back number and originates a call using the stored call back number when a specific key or menu is input, thereby improving user's convenience. In other words, the user does not need to memorize or separately record the call back number (e.g., an ARS number) and to directly input the phone number. In addition, minimization of the number of key inputs for a call back can encourage user's participation in the program (e.g., charity donation collection or popularity polling). Moreover, by allowing the user to transmit an SMS message for a call back, various applications may be available. For example, in the case of a charity donation collection broadcasting program, the user can set the desired amount of donation.

While the present invention has been shown and described with reference to preferred embodiments thereof, it will be understood by those skilled in the art that various changes in form and details may be made therein without departing from the scope of the invention.

## Claims

1. A digital broadcasting system comprising:
a digital broadcasting station for transmitting a transport stream packet including a phone number; and
a digital broadcasting player for receiving the transport stream packet, detecting the phone number from the received transport stream packet, and originating a call using the detected phone number if a user's call originating instruction is detected during playback of broadcasting.

2. The digital broadcasting system of claim 1, wherein the transport stream packet has an adaptation field including the phone number.

3. The digital broadcasting system of claim 2, wherein the adaptation field includes a flag and a service tag of a private_data_byte, in which the flag indicates the presence of the private_data_byte and the service tag indicates the type of transmission information forming the private_data_byte.

4. The digital broadcasting system of claim 3, wherein if the service tag has a specific value, transmission information corresponding to the specific value is an automatic response service number.

5. The digital broadcasting system of claim 3, wherein if the number of times the phone number is not detected from the private_data_byte of the received transport stream packet is greater than a threshold value, the user's call originating instruction is ignored.

6. The digital broadcasting system of one of claims 1 to 5, wherein the transport stream packet includes an electronic program guide including the phone number.

7. The digital broadcasting system of one of claims 1 to 6 wherein the digital broadcasting player includes a memory region for storing the detected phone number.

8. The digital broadcasting system of claim 6, wherein the digital broadcasting player includes a memory region for storing the detected phone number.

9. A call originating method during playback of broadcasting for a digital broadcasting player, the call originating method comprising the steps of:
receiving a transport stream packet including a phone number;
detecting the phone number from the received transport stream packet; and
originating a call using the detected phone number if a user's call originating instruction is sensed during playback of broadcasting.

10. The call originating method of claim 9, wherein the transport stream packet has an adaptation field including the phone number.

11. The call originating method of claim 9, wherein the transport stream packet includes an electronic program guide including the phone number.

12. A call originating method during playback of broadcasting for a digital broadcasting player, the call originating method comprising the steps of:
receiving a transport stream packet and checking if the received transport stream packet includes an adaptation field;
if the transport stream packet includes the adaptation field, checking the state of a transport_private_data_flag of the adaptation field;
if the transport_private_data_flag is set, determining that the transport stream packet includes a private_data_byte , checking a service tag of the private_data_byte to determine the type of transmission information, and detecting the phone number from the private_data_byte; and
if a user's call originating instruction is detected during playback of broadcasting, originating a call using the detected phone number.

13. The call originating method of claim 12, further comprising storing the detected phone number in a memory region.

14. The call originating method of claim 13, further comprising :
checking if another phone number has already been stored in the memory region;
if another phone number has already been stored in the memory region, comparing the detected phone number with the stored phone number; and
if the detected phone number and the stored phone number are not the same, updating the stored phone number by storing the detected phone number in the memory region.

15. The call originating method of claim 12, wherein the step of originating a call comprises:
checking if a charity donation key or menu is input;
if the input of the charity donation key or menu is detected, displaying a charity donation phone number stored in a memory region;
after displaying the charity donation phone number, displaying the amount of donation;
after displaying the amount of donation, checking if an OK key is input; and
if the input of the OK key is detected, originating a call using the charity donation phone number.

16. The call originating method of claim 15, further comprising originating a call only when an input password is the same as a previously registered password upon sensing the input of the OK key.

17. The call originating method of claim 9 or 15 wherein the step of originating a call is performed for transmission of a SMS message.

18. The call originating method of claim 9 or 15 wherein the step of originating a call is performed for voice communication.

19. The call originating method of claim 9 or 15, wherein the step of originating a call is performed for connection of an ARS call.

20. The call originating method of claim 12, wherein the private_data_byte includes a service tag, a service tag length, and a phone number.

21. The call originating method of claim 12, wherein the private_data_byte sequentially includes a 1-byte service tag field, a 1-byte service tag length field, and an 11-byte phone number field.

22. The call originating method of claim 12, wherein the user's call originating instruction is the input of a specific key or menu.

23. The call originating method of claim 12, wherein playback of broadcasting is temporarily terminated if the user's call originating instruction is sensed, and playback of broadcasting is resumed if a call according to the call origination is terminated.

24. The call originating method of claim 9 or 15 further comprising the step of checking the type of a call to be originated by the user, wherein the step of originating a call using the phone number comprises originating a call according to the checked type.
